# EUROPÄISCHE PATENTSCHRIFT

(11) **EP 2 774 735 B1**
(45) Veröffentlichungstag und Bekanntmachung des Hinweises auf die Patenterteilung: **30.10.2019**
(21) Anmeldenummer: 14156965.7
(22) Anmeldetag: 27.02.2014
(51) Int. Cl.: B27M 3/00, F16B 5/00, E04F 15/02, B27D 5/00

(54) **Verarbeitungsstation und Verfahren zum Anbringen eines Profilelements**
Processing station and process for applying a profiled element
Station et procédé de traitement pour l'application d'un élément profilé

(30) Priorität: 08.03.2013 DE 102013204028
(43) Veröffentlichungstag der Anmeldung: 10.09.2014
(73) Patentinhaber: HOMAG GmbH, 72296 Schopfloch (DE)
(72) Erfinder: Götz, Reiner, 72160 Horb-Diessen (DE); Dettling, Bernhard, 72172 Sulz-Hopfau (DE); Weimer, Lars, 72226 Simmersfeld (DE)
(74) Vertreter: Hoffmann Eitle

(56) Entgegenhaltungen:
- EP-A1- 1 674 223
- EP-A1- 2 052 822
- WO-A1-97/05993
- DE-A1- 2 427 594
- DE-A1- 2 851 582
- DE-A1- 19 917 741
- DE-C1- 10 064 280
- US-A- 1 977 080
- US-A- 6 058 991

## Beschreibung

### Technisches Gebiet

Die vorliegende Erfindung betrifft eine Verarbeitungsstation zum Anbringen eines Profilelements, an einem insbesondere plattenförmigen Werkstück, gemäss dem Oberbegriff des Anspruchs 1 und ein Verfahren zum Anbringen eines Profilelements an einem bevorzugt plattenförmigen Werkstück mit einer der Verarbeitungsstation gemäß einem der Ansprüche 1 bis 9. Eine solche Verarbeitungsstation und ein Verfahren zum Anbringen eines Profilelementes sind aus dem Dokument EP1674223A1 bekannt. Die genannten Werkstücke werden rein beispielhaft als Fußbodendielen verwendet, können jedoch in anderen Bereichen der holzverarbeitenden Industrie zur Anwendung kommen.

### Stand der Technik

Als Stand der Technik ist die DE 2006 011 887 A1 bekannt, die ein Sperrelement für ein Befestigungssystem für viereckige, tafelförmige Paneele betrifft, wobei das Sperrelement mit einem Einsetzabschnitt zum Einsetzen des Sperrelements in eine in Längsrichtung einer Kante der Paneele eingebrachten Sperrnut eines ersten Paneels in einer Einsetzposition und einem Sperrabschnitt zum Eingriff in eine hinterschneidende Rastvertiefung vorgesehen ist, die in einer Verlegeanordnung der Paneele in einer gegenüberliegenden Kante eines zweiten Paneels und in Längsrichtung dieser Kante verlaufen. Zweckmäßig weist die Vorschubeinrichtung wenigstens eine Vorschubrolle auf, mit der eine Drehbewegung über einen Reibkontakt auf den Sperrelement-Strang übertragen wird. Die Andrückeinrichtung weist wenigstens eine Andrückrolle auf, mittels der eine Andrückkraft senkrecht zur Kante des Paneels erzeugbar ist, und wobei mit der Andrückrolle deren Drehbewegung per Reibkontakt in eine Transportbewegung des Sperrelements umwandelbar ist. Insbesondere geschieht dies ab dem Zeitpunkt, zu dem das Sperrelement von dem Sperrelement-Strang abgetrennt wurde. Die Andrückrolle wird so angetrieben, dass ihre Umfangsgeschwindigkeit mit der Transportgeschwindigkeit des Paneels in der Produktionsanlage synchronisiert ist.

Als weiteres Dokument ist die EP 2 052 822 A2 bekannt, die eine Vorrichtung zeigt, mit der ein Stützelement und ein Kantenelement zusammen an einem Werkstück aufgebracht werden.

Ferner ist die WO 97/05093 A1 bekannt, die eine Vorrichtung zum Anbringen eines Kantenstreifens an einer Umfangskante eines Paneels zeigt.

Die DE 199 17 741 A1 zeigt eine Vorrichtung zum Anfahren eines Kantenstreifens an eine Schmalflächenseite einer eckigen Platte.

Des Weiteren zeigt die EP 1 674 223 A1 eine Vorrichtung zum Einsetzen von Verbindungselementen in die Stirn- und/oder Längsseite technischer Holzprodukte.

### Gegenstand der Erfindung

Aufgabe der vorliegenden Erfindung ist es, eine Verarbeitungsstation sowie ein Verfahren bereitzustellen, mit denen Profilelemente positionsgenau und mit kurzer Taktzeit an einem Werkstück angebracht werden können.

Eine derartige Verarbeitungsstation wird durch den Gegenstand des unabhängigen Anspruchs 1 bereitgestellt. Ein Verfahren ist in Anspruch 14 aufgeführt.

Einer der Kerngedanken der vorliegenden Erfindung ist es, einen Profilelement-Strang einer Andrückrolle zum Andrücken eines Profilelements gegen ein Werkstück möglichst torsionsfrei zuzuführen. Ferner wird eine freidrehende Andrückrolle bereitgestellt, die selbst nicht aktiv, also über einen Motor oder ein mechanisches Getriebe, angetrieben wird, sondern zusammen mit dem zugeführten Profilelement-Strang sowie ggf. dem vorbeilaufenden Werkstück dreht und eine Anpresskraft bereitstellt.

Auf diese Weise sind keine Reibkräfte zwischen der Andrückrolle, dem Profilelement und dem Werkstück notwendig, um das Profilelement am Werkstück anzubringen. Ferner wird es durch die erfindungsgemäße Verarbeitungsstation vermieden oder verhindert, dass relativ hohe Zugkräfte am Profilelement-Strang aufgebracht werden. Gemäß der Erfindung, wird eine positionsgenaue Zuführung des Profilelement-Strang zur Andrückrolle, und somit zum Werkstück, sichergestellt. Insbesondere kann die Bewegungsgeschwindigkeit des Profilelement-Strangs mit dem vorbeilaufenden Werkstück im Wesentlichen synchronisiert werden. Zusätzlich zur Andrückrolle kann/können eine oder mehrere Nachdrückrollen vorgesehenen sein, die den Profilelement-Strang noch sicherer an das Werkstück andrücken.

Ist der Zwischenspeicher der erfindungsgemäßen Befestigungsmaschine vertikal ausgerichtet, wird eine besonders leichtgängige Zwischenspeicherung bereitgestellt, bei der äußerst geringe Zugkräfte am Profilelement-Strang aufgebracht werden. Der (erste bzw. zweite) Zuführantrieb sorgt dafür, dass der Profilelement-Strang aus der Speichereinrichtung kommend in vertikaler Richtung nach oben in den Zwischenspeicher geschoben wird. Der (erste bzw. zweite) Zwischenantrieb wiederum stellt eine Förderung des Profilelement-Strangs in Richtung der Andrückrolle sicher, wobei der Profilement-Strang zumindest vor dem endgültigen Anbringen eines Profilelements mit Hilfe einer Trennstation abgetrennt werden kann. Ausgehend vom Zwischenspeicher wird der Profilement-Strang der Andrückrolle zugeführt, und zwar bevorzugt derart, dass der Profilement-Strang im Bereich der Andrückrolle im Wesentlichen horizontal ausgerichtet ist.

Gemäß der Erfindung, ist in Durchlaufrichtung des Profilelement-Strangs zwischen dem Zuführantrieb und dem Zwischenspeicher ein erster Führungskanal und/oder zwischen dem Zwischenspeicher und dem Zwischenantrieb ein zweiter Führungskanal vorgesehen. Durch die Führungskanäle wird der Profilelement-Strang torsionsfrei geleitet.

Ferner kann die Verarbeitungsstation eine Drucklufteinrichtung aufweisen, die die freidrehende Andrückrolle in eine Drehbewegung versetzten kann. Somit kann die freidrehende Andrückrolle passiv gedreht werden, indem ein Druckluftimplus an dieser aufgebracht wird. Dies geschieht insbesondere dann, wenn ein Werkstück auf die Andrückrolle zuläuft oder wenn der Betrieb der Maschine gestartet wird.

Gemäß einer Ausführungsform ist insbesondere im Bereich des Zwischenspeichers eine Erfassungseinrichtung vorgesehen, mit der ein Füllstand des Zwischenspeichers, insbesondere eine Länge des im Zwischenspeicher vorgesehenen Abschnitts des Profilelement-Strangs, überwacht wird. Rein beispielhaft kann es sich bei der Erfassungseinrichtung um eine oder mehrere Lichtschranken handeln. Der Zuführmotor kann auf diese Weise eine Information erhalten, dass ein weiterer Abschnitt des Profilelement-Strangs in den Zwischenspeicher zuzuführen ist. Ferner kann die Trennstation zum Trennen des Profilelement-Strangs ein Kreismesser aufweisen. Dieses ist insbesondere verdeckt vorgesehen, so dass für den Bediener keine Verletzungsgefahr besteht.

Gemäß einer Ausführungsform ist der Zwischenspeicher durch ein transparentes Abdeckelement abgedeckt. Auf diese Weise ist es einem Bediener möglich, die im Zwischenspeicher aufgenommene Länge des Profilelement-Strangs zu prüfen und ggf. Fehler beim Transport des Profilelement-Strangs innerhalb des Zwischenspeichers zu identifizieren.

Gemäß der Erfindung hat der Zuführantrieb einen ersten und einen zweiten Zuführantrieb zum Zuführen eines Profilelement-Strangs aus einem Speicher und/oder der Zwischenantrieb hat einen ersten und einen zweiten Zwischenantrieb zum Fördern eines Profilelement-Strangs aus dem Zwischenspeicher zur Andrückrolle. Mit dieser Weiterbildung der Erfindung ist ein Wechsel des Profilelement-Strangs bei äußerst kurzen Stillstandzeiten, ggf. sogar ohne Stillstandzeit der Verarbeitungsstation, besonders leicht möglich.

Ferner kann ein Lumineszenz-Taster vorgesehen sein, der eingerichtet ist, die Anbringung, insbesondere die korrekte Einbringung, des Profilelement-Strangs am Werkstück (bzw. einer hieran vorgesehenen Nut) zu überwachen. Auf diese Weise kann die Qualität der mit der Verarbeitungsstation bearbeiteten Werkstücke kontinuierlich sichergestellt werden.

Gemäß der Erfindung ist an der Verarbeitungsstation eine Umlenkeinrichtung angebracht, wobei der Profilelement-Strang die Speichereinrichtung bevorzugt in einer im Wesentlichen horizontalen Richtung verlässt und durch die Umlenkeinrichtung in eine im Wesentlichen vertikale Richtung umgelenkt wird, wobei die Umlenkeinrichtung insbesondere ein Zuführrohr oder eine Umlenkrolle umfasst. Im Falle des Zuführrohrs ist am Eingang dieses insbesondere eine Matrize vorgesehen. Ferner kann am Ausgang des Zuführrohrs eine Auslassvorrichtung vorgesehen sein, die beispielsweise eine Verdrehung des Profilelement-Strangs bewirken kann.

Der zuvor beschrieben Zuführantrieb (bzw. die Zuführantriebe) und/oder der Zwischenantrieb (bzw. die Zwischenantriebe) weisen bevorzugt eine profilierte Transportrolle sowie eine ebenfalls profilierte Gegendruckrolle auf, mit denen der Profilelementstrang sicher aufgenommen werden und gefördert werden kann.

Die vorliegende Erfindung ist ferner auf eine Bearbeitungsmaschine mit einer zuvor beschriebenen Verarbeitungsstation gerichtet, welche Bearbeitungsmaschine eine Fördereinrichtung zur Bewegung von Werkstücken entlang der Verarbeitungsstation aufweist. Die erfindungsgemäße Verarbeitungsstation kann besonders leicht in eine solche Bearbeitungsmaschine integriert werden. Auch kann eine solche Bearbeitungsmaschine ferner eine bevorzugt bewegbare Speichereinrichtung in Form einer Speicherrolle aufweisen, auf der eine Haspel mit einem aufgerollten Profilelement-Strang aufgenommen werden kann. Die Speichereinrichtung kann einen eigenen Antrieb aufweisen, um den Profilelement-Strang zur Verarbeitungsstation zuzuführen. Auch kann die Speichereinrichtung eine Tänzerwalze zur Regelung des Antriebs aufweisen. Hierbei wird der Profilelement-Strang über die Tänzerwalze geführt, und je nach Lage der Tänzerwalze wird der Antrieb der Speichereinrichtung gestartet.

Im Bereich der Bearbeitungsmaschine kann ein bevorzugt mechanischer Taster vorgesehen sein, der überwacht, ob das in den Bereich der Verarbeitungsstation geführte Werkstück tatsächlich zur Anbringung eines Profilelement-Strangs vorbereitet ist. Insbesondere wird überwacht, ob eine Nut in das Werkstück eingebracht ist. Sollte dies nicht der Fall sein, kann auf Grundlage einer Information vom beschriebenen Taster die Anbringung des Profilelement-Strangs verhindert werden. Es kommt somit zu keinem Maschinenstillstand.

Ferner ist eine Bearbeitungsmaschine mit einer Verarbeitungsstation gemäß einer der vorangegangenen Ausgestaltungen Teil der Erfindung, welche Bearbeitungsmaschine eine Fördereinrichtung zur Bewegung von Werkstücken entlang der Verarbeitungsstation aufweist. Diese Bewegung der Werkstücke soll bevorzugt in einer horizontalen Richtung erfolgen, so dass die Werkstücke an der Verarbeitungsstation vorbeilaufen und in deren Bereich mit einem Profilelement versehen werden könne.

Insbesondere weist die Bearbeitungsmaschine ferner eine bevorzugt bewegbare Speichereinrichtung in Form einer Speicherrolle aufweist, die insbesondere mit einem bevorzugt zentral angeordneten Antrieb und beispielsweise einer Puffereinrichtung, insbesondere einer Tänzerwalze, zur Regelung des Antriebs versehen ist.

Ferner kann in Durchlaufrichtung des Profilelement-Strangs zwischen der Speichereinrichtung und dem Zuführantrieb eine Umlenkeinrichtung vorgesehen ist, wobei der Profilelement-Strang die Speichereinrichtung bevorzugt in einer im Wesentlichen horizontalen Richtung verlässt und durch die Umlenkeinrichtung in eine im Wesentlichen vertikale Richtung umgelenkt wird.

Gemäß einer weiteren Zielrichtung der vorliegenden Erfindung kann die zuvor in Zusammenhang mit der Bearbeitungsmaschine erwähnte Speichereinrichtung auch für sich betrachtet werden.

Insbesondere ist eine bevorzugt bewegbare Speichereinrichtung in Form einer Speicherrolle vorgesehen, die insbesondere mit einem bevorzugt zentral angeordneten Antrieb und beispielsweise einer Tänzerwalze zur Regelung des Antriebs versehen ist.

Das erfindungsgemäße Verfahren ist insbesondere mit der Verarbeitungsstation bzw. der diese aufweisende Bearbeitungsmaschine einer der zuvor erwähnten Ausgestaltungen verwendbar.

### Kurze Beschreibung der Zeichnung

- Fig. 1: zeigt eine Bearbeitungsmaschine, die mit einer Ausführungsform einer Verarbeitungsstation gemäß der vorliegenden Erfindung versehen ist.
- Fig. 2: zeigt eine perspektivische Detailansicht der in Fig. 1 dargestellten Verarbeitungsstation.

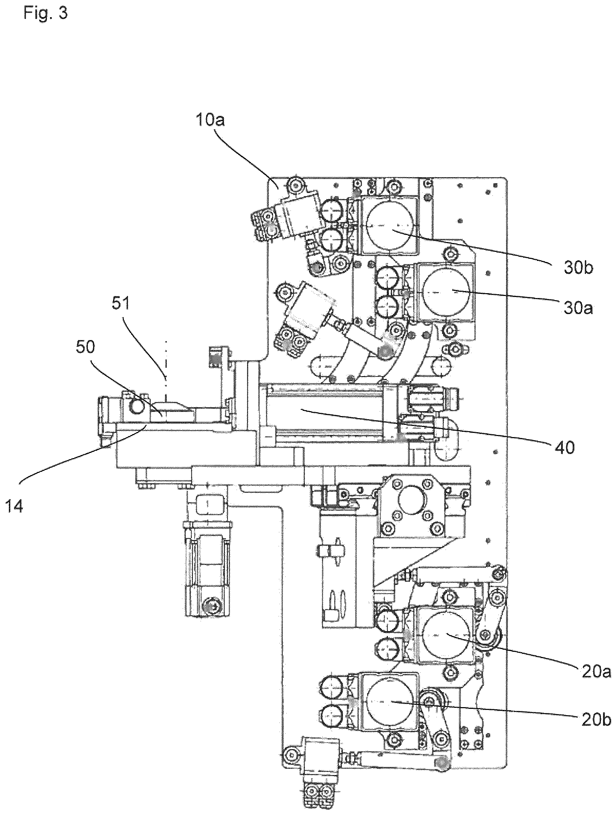

- Fig. 3: ist eine Seitenansicht eines unteren Abschnitts der in Fig. 2 dargestellten Verarbeitungsstation.

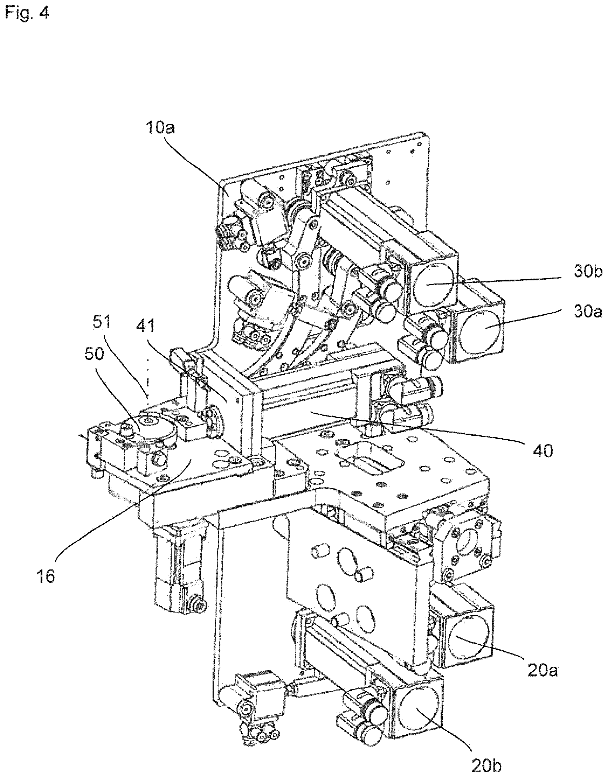

- Fig. 4: ist eine perspektivische Ansicht des in Fig. 3 dargestellten unteren Abschnitts der Verarbeitungsstation.
- Fig. 5: zeigt eine alternative Ausführungsform einer Umlenkeinrichtung zur Führung eines Profilelement-Strangs.
- Fig. 6: ist eine Seitenansicht einer alternativen Ausführungsform der Speicherrolle.

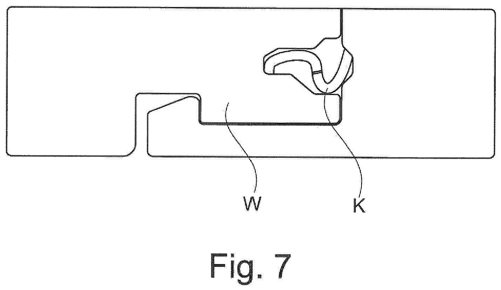

- Fig. 7: ist eine Seitenansicht zweier Werkstücke, wobei in eines der Werkstücke ein Profilelement (Keder) eingebracht und die dargestellten Werkstücke anschließend miteinander verbunden wurden.

### Detaillierte Beschreibung der bevorzugten Ausführungsformen

Nachfolgend wird unter Bezugnahme auf die beigefügten Figuren eine bevorzugte Ausführungsform der vorliegenden Erfindung beschrieben. Weitere in diesem Zusammenhang genannte Varianten und Modifikationen einzelner Merkmale können jeweils miteinander kombiniert werden, um neue Ausführungsformen auszubilden. Ebenso ist ersichtlich, dass bestimmte Verfahrensvarianten miteinander kombiniert werden können, um neue Verfahrensabläufe abzubilden. Die beschriebenen Verfahrensabläufe können insbesondere im Zusammenhang mit der beschriebenen Bearbeitungsmaschine bzw. der Verarbeitungsstation gemäß der vorliegenden Erfindung zur Anwendung kommen.

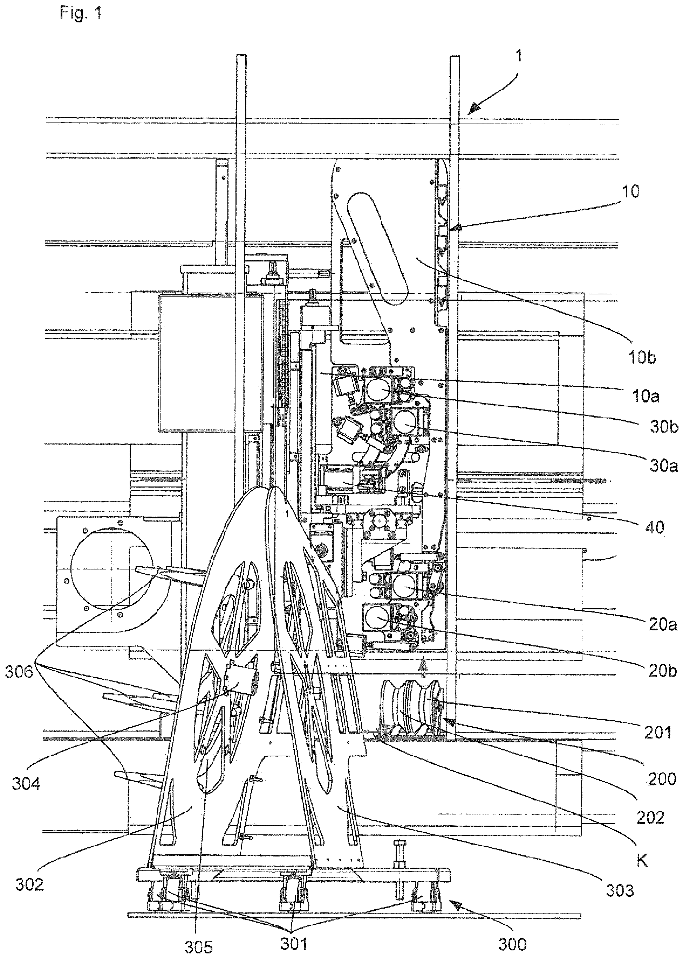

Fig. 1 zeigt eine perspektivische Ansicht einer Bearbeitungsmaschine 1, an der eine Verarbeitungsstation 10 gemäß einer bevorzugten Ausführungsform der vorliegenden Erfindung angebracht ist. Innerhalb der dargestellten Bearbeitungsmaschine 1 können plattenförmige Werkstücke bzw. Paneele in einer horizontalen Richtung gefördert werden, so dass die Werkstücke an der Verarbeitungsstation 10 vorbei geführt werden (in Fig. 1 bspw. von rechts nach links). Durch die Verarbeitungsstation 10 wird, wie nachfolgend im Detail erläutert, ein Profilelement, auch Keder genannt, in eine Nut des jeweiligen Werkstücks eingeführt.

Der Profilelement-Strang selbst ist in den Figuren nicht explizit gezeigt, jedoch wird seine Laufrichtung mit dem Bezugszeichen K angedeutet, so dass unter Bezugnahme auf die Laufrichtung des Profilelement-Strangs nachfolgend lediglich der Profilelement-Strang K erwähnt ist.

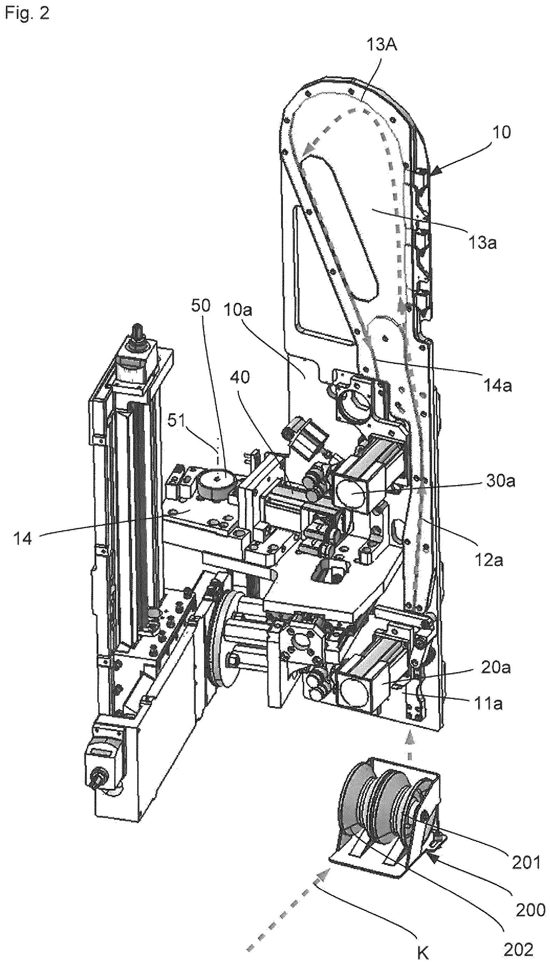

Die Verarbeitungsstation 10 weist unter anderem ein im Einbauzustand der Verarbeitungsstation 10 in der Bearbeitungsmaschine 1 vertikal ausgerichtetes Trägerelement 10a sowie ein Abdeckelement 10b auf. Das Abdeckelement 10b wurde in der in Fig. 2 dargestellten Ansicht weggelassen, sodass ein durch das Abdeckelement 10b verdeckter Abschnitt der Verarbeitungsstation 10 freigelegt wird. Gemäß einer Modifikation kann das Abdeckelement 10b aus einem transparenten Material gefertigt sein, so dass ein Bediener den Füllstand des Kederstrangs K innerhalb der Verarbeitungsstation 10 erkennen kann.

Die Verarbeitungsstation 10 umfasst einen ersten Zuführantrieb 20a sowie einen zweiten Zuführantrieb 20b, die in der vorliegenden Ausführungsform jeweils als ein Servomotor ausgebildet sind. Allerdings sind auch andere Fördermechanismen zur Bewegung des Profilelement-Strangs K (nachfolgend als Kederstrang K bezeichnet) denkbar. Mit jedem der Zuführantriebe 20a, 20b kann ein Kederstrang K aus einer später beschriebenen Speichereinrichtung 300 in die Verarbeitungsstation 10 zugeführt werden. Gemäß der vorliegenden Ausführungsform weisen hierzu die Zuführantriebe 20a, 20b jeweils Transportrollen auf (nicht dargestellt), die derart profiliert sind, dass sie den Kederstrang K erfassen und von der Speichereinrichtung abziehen können.

Da zwei Zuführantriebe 20a, 20b bereitgestellt werden, ist es möglich, mit einem der Zuführantriebe einen Kederstrang K zu fördern, während am anderen Zuführantrieb ein Wechsel des Kederstrangs K vorgenommen wird. Somit können im Wesentlichen ohne Unterbrechung des Betriebs der Verarbeitungsstation 10 Kederstränge K gewechselt werden.

Hierzu ist im unteren Abschnitt der Verarbeitungsstation 10 ein dem ersten Zuführantrieb 20a zugeordneter erster Zuführkanal 11a sowie ein dem zweiten Zuführantrieb 20b zugeordneter, jedoch nicht im Detail dargestellter, zweiter Zuführkanal vorgesehen. Durch den jeweiligen Zuführkanal wird ein Kederstrang K dem jeweiligen Zuführantrieb zugeführt, der diesen Kederstrang K in einen dem ersten Zuführantrieb 20a zugeordneten ersten Führungskanal 12a bzw. einen weiteren dem zweiten Zuführantrieb 20b zugeordneter Führungskanal weiterleitet.

Nachfolgend wird lediglich die Laufrichtung des Kederstrangs, der vom ersten Zuführantrieb 20a zugeführt wird, im Detail beschrieben. Der Laufweg eines weiteren Kederstrangs, der vom zweiten Zuführantrieb 20b zugeführt wird, führt diesen ggf. auf ähnliche Weise in einen weiteren Zwischenspeicher, der hier nicht im Detail dargestellt ist.

Der erste Führungskanal 12a stellt in Laufrichtung des Kederstrangs K eine Verbindung zwischen dem ersten Zuführantrieb 20a und einem Zwischenspeicher 13a bereit, wobei der Zwischenspeicher 13a zwischen dem Trägerelement 10a und dem Abdeckelement 10b ausgebildet ist. Im Zwischenspeicher 13a ist Gemäß der Erfindung, der Kederstrang K relativ frei beweglich, und wird durch die in vertikaler Richtung obere Rundung 13A des Zwischenspeichers 13a von einer eher vertikalen Richtung in eine in vertikaler Richtung nach unten weisende Richtung umgelenkt, sodass der Kederstrang K in einen zweiten Führungskanal 14a gelangt. Die Umlenkung des Kederstrangs K im Zwischenspeicher 13a erfolgt schwerkraftbedingt bzw. durch die genannte obere Rundung 13A des Zwischenspeichers 13a.

Ausgehend vom zweiten Führungskanal 14a gelangt der Kederstrang K mit einem ersten Zwischenantrieb 30a in Eingriff. Der erste Zwischenantrieb 30a zieht den Kederstrang K somit aus dem Zwischenspeicher 13a ab und führt den Kederstrang in Richtung einer Andrückrolle 50.

In der dargestellten Ausführungsform ist ferner ein zweiter Zuführantrieb 20b vorgesehen, der einen anderen Kederstrang in einen weiteren Zwischenspeicher (nicht dargestellt) führen kann. Ferner ist ein zweiter Zuführantrieb 30b dargestellt, der diesen anderen Kederstrang K zur nachfolgend erläuterten Trennstation 40 führt. Durch die doppelte Ausführung der Zuführantriebe, Zwischenspeicher und Zwischenantriebe kann ein Kederwechsel im Bereich der Trennstation 40 vorgesehen werden.

Dieser Wechsel kann mit unterschiedlich ausgestalteten Kedersträngen erfolgen. Es können jedoch auch gleich oder ähnlich ausgestaltete Kederstränge gefördert und an einem Werkstück angebracht werden.

In Durchlaufrichtung des Kederstrangs K nachfolgend zum ersten bzw. zweiten Zwischenantrieb 30a, 30b ist eine am Trägerelement 10a der Verarbeitungsstation 10 montierte Trennstation 40 vorgesehen, mit der der Kederstrang K in Kederelemente aufgeteilt werden kann. Hierzu umfasst die Trennstation 40 gemäß der dargestellten Ausführungsform der vorliegenden Erfindung ein Gehäuse 41, welches ein Kreismesser aufnimmt. Es sind jedoch auch andere Trennmittel denkbar, beispielsweise Säge, Linearmesser, Scherenmittel oder ähnliche Trennmittel. Die Trennung des Kederstrangs K erfolgt in Abstimmung mit der Dimension des Werkstücks, also beispielsweise einer in das Werkstückstück eingebrachten Nut zur Aufnahme eines Abschnitts des Kederstrangs K.

Die Verarbeitungsstation 10 umfasst ferner auf einer mit dem Trägerelement 10a verbundenen Platte 16 eine freidrehende Andrückrolle 50, deren Drehachse 51 in einer im Wesentlichen vertikalen Richtung verläuft, während der Kederstrang K in diesem Bereich der Verarbeitungsstation 10 der Andrückrolle 50 in einer im Wesentlichen horizontalen Richtung zugeführt werden. Die Zuführung eines Kederstrangs K wird durch den ersten bzw. zweiten Zwischenantrieb 30a, 30b sichergestellt, während die freidrehende Andrückrolle 50 eine Andrückkraft bereitstellt, um einen Abschnitt des Kederstrangs K gegen ein an der Andrückrolle 50 vorbeilaufendes Werkstück anzudrücken. Darüber hinaus können eine oder mehrere Nachdrückrollen vorgesehen sein.

Gemäß der vorliegenden Ausführungsform weist die freidrehende Andrückrolle 50 keinen eigenen Antrieb auf. Ferner wird auch kein Getriebe bereitgestellt, um eine Drehbewegung auf die Andrückrolle 50 zu übertragen. Allerdings kann die Andrückrolle 50 passiv gedreht werden, beispielsweise indem die Andrückrolle 50 mit dem Kederstrang K sowie dem vorbeilaufenden Werkstück in Verbindung gebracht wird.

Gemäß einer Modifikation der vorliegenden Ausführungsform kann es jedoch auch vorgesehen sein, dass im Bereich der Andrückrolle 50 eine Drucklufteinrichtung vorgesehen ist, die die Andrückrolle 50 durch einen Druckluftimpuls in eine Drehbewegung versetzt. Dies geschieht insbesondere dann, wenn ein Werkstück auf die Andrückrolle 50 zuläuft, in welches ein Abschnitt des Kederstrangs K eingebracht werden soll. Der Andrückrolle 50 wird gemäß dieser Modifikation eine anfängliche Drehung verliehen, sodass die Andrückrolle 50 nicht erst bei einer Berührung mit dem Werkstück zu drehen beginnt. Zwar findet auf diese Weise keine vollständige Synchronisation der Drehung der Andrückrolle 50 mit dem vorbeilaufenden Werkstück statt. Eine solche vollständige Synchronisation der Bewegungsgeschwindigkeiten ist bei einer freidrehenden Andrückrolle jedoch auch nicht notwendig.

Gemäß der Erfindung sind sowohl ein erster und ein zweiter Zuführantrieb 20a, 20b als auch eine erster sowie ein zweiter Zwischenantrieb 30a, 30b vorgesehen. Allerdings kann gemäß einer Modifikation der vorliegenden Erfindung - wie bereits erwähnt - lediglich ein Zuführantrieb bzw. ein Zwischenantrieb vorgesehen sein. In Fig. 2 sind beispielsweise der zweite Zuführantrieb und der zweite Zwischenantrieb nicht gezeigt, auch wenn deren Anbringung am Trägerelement 10a bereits vorbereitet ist.

Es ist jedoch ersichtlich, dass die Verarbeitungsstation 10 bei entsprechender Ausgestaltung auch mehr als zwei Kederstränge K zur Trennstation 40 und zur Andrückrolle 50 sicherstellen kann. Hierzu werden u.a. weitere Zuführantriebe bzw. Zwischenantriebe vorgesehen.

Die in Figur 1 dargestellte Speichereinrichtung 300 ist mit Rollen 301 versehen, so dass diese in den Bereich der Bearbeitungsmaschine 1 bewegt werden kann. Gemäß einer alternativen Ausführungsform kann die Speichereinrichtung 300 jedoch auch unbeweglichen im Bereich der Bearbeitungsmaschine 1 aufgestellt sein. Die Speichereinrichtung 300 kann eine Restlängenerfassungsvorrichtung aufweisen, mit der die in der Speichereinrichtung 300 vorhandene Länge des Kederstrangs K überwacht wird.

Die Speichereinrichtung 300 gemäß Figur 1 weist eine erste Wandung 302 sowie eine zweite Wandung 303 auf. Ferner umfasst die Speichereinrichtung 300 eine Drehachse 304 sowie einen mittels der Drehachse 304 drehbaren Ring 305. Der Ring 305 nimmt konisch ausgebildete Dorne 306 auf (in der vorliegenden Ausführungsform mehrere Dorne 306, beispielsweise 5 oder 6), an denen eine Haspel aufgenommen werden kann. In der in Figur 1 dargestellten Ausführungsform ist lediglich an der ersten Wandung 302 der um die Drehachse 304 drehbare Ring 305 angebracht. Es ist jedoch ersichtlich, dass auch an der zweiten Wandung 303 ein drehbarer Ring zur Aufnahme einer Haspel angeordnet sein kann. Sind zwei Haspeln an der Speichereinrichtung 300 vorgesehen, können somit von einer Speichereinrichtung zwei Kederstränge zur Verarbeitungsstation 10 zugeführt werden.

An der Bearbeitungsmaschine 1 ist in vertikaler Richtung unterhalb der Verarbeitungsstation 10 eine Umlenkeinrichtung 200 vorgesehen, die in der dargestellten Ausführungsform eine erste Umlenkrolle 201 und eine zweite Umlenkrolle 202 umfasst. Die Drehachse der ersten und zweiten Umlenkrolle 201, 202 erstrecken sich in einer im Wesentlichen horizontalen Richtung. Obwohl die dargestellten Umlenkrollen 201, 202 in der Umlenkeinrichtung 200 über eine gemeinsame Achse unabhängig voneinander drehbar gelagert sind, ist ersichtlich, dass die Umlenkrollen 201, 202 auch getrennt voneinander vorgesehen sein können. Die Umlenkeinrichtung kann gemäß einer weiteren Modifikation auch an der Verarbeitungsstation 10 angebracht sein.

Die erste Umlenkrolle 201 ist hierbei derart angeordnet, dass ein von der Speichereinrichtung 300 kommender Kederstrang K in den Bereich des ersten Zuführantriebs 20a gelangen kann, wohingegen ein über die zweite Umlenkrolle 202 von einer nicht dargestellten Speichereinrichtung zugeführter Kederstrang K in den Bereich des zweiten Zuführantriebs 20b gelangen kann.

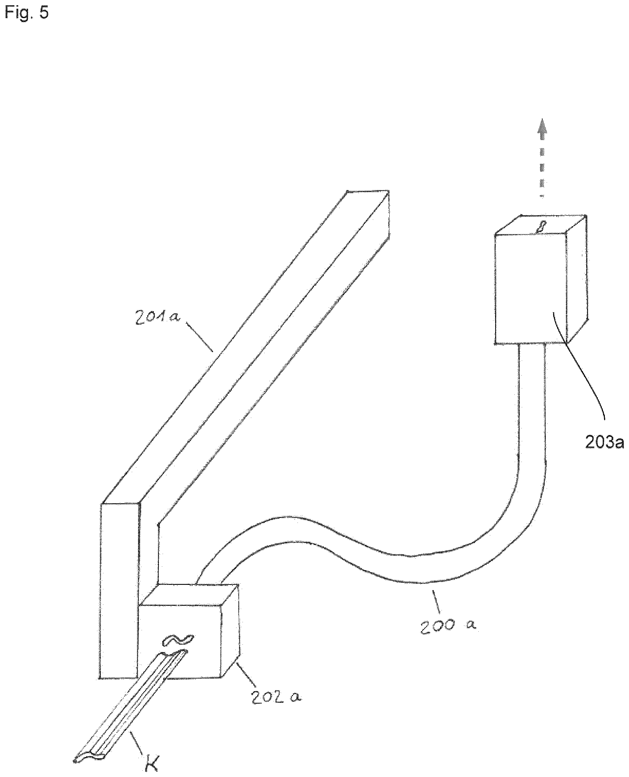

Gemäß einer Modifikation der in Fig. 1 dargestellten Umlenkeinrichtung kann anstelle von Umlenkrollen ein Zuführrohr 200a vorgesehen sein (siehe Figur 5), das über einen ggf. schwenkbar oder auch fest angebrachter Halter 201a mit der Verarbeitungsstation 10 in Verbindung steht. Der Halter 201a kann an der Verarbeitungsstation 10 oder an der Bearbeitungsmaschine 1 angebracht sein.

Am Halter 201a ist eine Matrize 202a vorgesehen, über die der Kederstrang K in das Zuführrohr 200a gelangt. Die Matrize 202a stellt sicher, dass der Kederstrang K lediglich in einer bestimmten Ausrichtung in das Zuführrohr 200a eingeführt werden kann.

In Durchlaufrichtung des Kederstrangs K ist dem Zuführrohr 200a eine Ausgabeeinrichtung 203a vorgesehen, in der der Kederstrang K verdreht wird. Diese Verdrehung lässt sich aus einem Vergleich des Profils auf der Matrize 202a im Vergleich zum Profil auf der Ausgabeeinrichtung 203a in Fig. 5 entnehmen.

Da in dieser Ausgestaltung das Zuführrohr 200a vorgesehen ist, kann die Führung und Ausrichtung des Kederstrangs K noch flexibler vorgenommen werden. Auch lässt sich der Kederstrang recht einfach in die Matrize 202a einführen, wobei das Profil der Matrize 200a die Ausrichtung des Kederstrangs vorgibt. Diese Bauform ist ferner extrem kompakt.

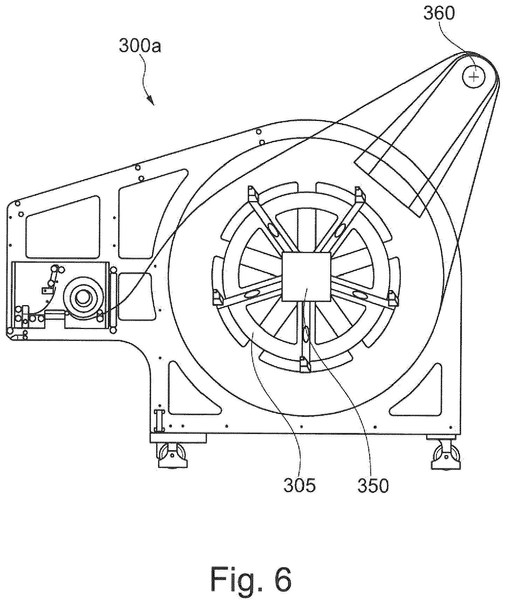

In Fig. 6 ist eine alternative Ausführungsform einer Speichereinrichtung 300a dargestellt. Diese weist einen im Bereich der Drehachse 304 angeordneten Antriebsmotor 350 auf, mit dem die den Kederstrang K aufnehmende Haspel gedreht wird. Ferner umfasst die Speichereinrichtung 300a als Puffereinrichtung 360, insbesondere eine Tänzerwalze, über die der Kederstrang K geführt wird, und die den Betrieb des Antriebsmotors 350 regelt.

Durch die Verarbeitungsstation 10 und ggf. die Speichereinrichtung mit dem Puffereinrichtung wird eine Pufferung des zugeführten Kederstrangs K erreicht. Somit kann beispielsweise der Kederstrang im Wesentlichen konstant von der Speichereinrichtung zur Verarbeitungsstation gefördert werden, während die Aufbringung von Abschnitten des Kederstrangs K an vorbeilaufenden Werkstücken schubweise erfolgt.

## Patentansprüche

1. Verarbeitungsstation (10) zum Anbringen eines Profilelements an einem plattenförmigen Werkstück (W), nämlich in einer Nut eines Paneels, welches Werkstück bevorzugt zumindest teilweise einen Holz-, Holzwerkstoff- oder Kunststoffabschnitt aufweist, mit:
einem Zuführantrieb (20a, 20b) zum Zuführen eines Profilelement-Strangs (K) aus einer Speichereinrichtung (300, 300a),
einem bevorzugt vertikal ausgerichteten Zwischenspeicher (13a) zur Aufnahme eines Abschnitts des Profilelement-Strangs (K),
einem Zwischenantrieb (30a, 30b) sowie einer Trennstation (40) zum Trennen des Profilelement-Strangs (K), wobei
die Verarbeitungsstation (10) eine freidrehende Andrückrolle (50) zum Andrücken eines durch den Zwischenantrieb (30a, 30b) zugeführten Abschnitts des Profilelement-Strangs (K) gegen ein Werkstück aufweist, wobei mittels dem Zwischenantrieb (30a, 30b), eine positionsgenaue Förderung des Profilelement-Strangs (K) zur Andrückrolle (50) erfolgt,
wobei an der Verarbeitungsstation (10) eine Umlenkeinrichtung (200, 200a) angebracht ist, wobei der Profilelement-Strang die Speichereinrichtung (300, 300a) verlässt und durch die Umlenkeinrichtung (200, 200a) in eine im Wesentlichen vertikale Richtung umgelenkt wird, **dadurch gekennzeichnet, dass**
gegebenenfalls in Durchlaufrichtung des Profilelement-Strangs (K) zwischen dem Zuführantrieb (20a, 20b) und dem Zwischenspeicher (13a) ein erster Führungskanal (12a) vorgesehen ist, und
zwischen dem Zwischenspeicher (13a) und dem Zwischenantrieb (30a, 30b) ein zweiter Führungskanal (14a) vorgesehen ist,
wobei der Profilelement-Strang (K) in dem Zwischenspeicher (13a) relativ frei beweglich ist und durch eine in vertikaler Richtung obere Rundung des Zwischenspeichers (13a) von einer eher vertikalen Richtung in eine in vertikaler Richtung nachunten weisende Richtung umgelenkt wird, sodass der Profilelement-Strang (K) in den zweiten Führungskanal (14a) gelangt.

2. Verarbeitungsstation (10) gemäß Anspruch 1, **dadurch gekennzeichnet, dass** die Verarbeitungsstation (10) eine Drucklufteinrichtung aufweist, die die freidrehende Andrückrolle (50) in eine Drehbewegung versetzten kann.

3. Verarbeitungsstation (10) gemäß einem der vorangegangenen Ansprüche, **dadurch gekennzeichnet, dass** eine Erfassungseinrichtung vorgesehen ist, mit der ein Füllstand des Zwischenspeichers (13a), insbesondere eine Länge des im Zwischenspeicher (13a) vorgesehenen Abschnitts des Profilelement-Strangs, überwacht wird, beispielsweise mittels einer oder mehrerer Lichtschranken.

4. Verarbeitungsstation (10) gemäß einem der vorangegangenen Ansprüche, **dadurch gekennzeichnet, dass** der Zuführantrieb (20a, 20b) ein Servoantrieb ist, wobei der Zuführantrieb (20a, 20b) und/oder der Zwischenantrieb (30a, 30b) insbesondere über eine Momentenfreischaltung verfügt.

5. Verarbeitungsstation (10) gemäß einem der vorangegangenen Ansprüche, **dadurch gekennzeichnet, dass** die Trennstation (40) zum Trennen des Profilelement-Strangs ein Kreismesser aufweist.

6. Verarbeitungsstation (10) gemäß einem der vorangegangenen Ansprüche, **dadurch gekennzeichnet, dass** der Zwischenspeicher (13) durch ein transparentes Abdeckelement (10b) abgedeckt wird.

7. Verarbeitungsstation (10) gemäß einem der vorangegangenen Ansprüche, **dadurch gekennzeichnet, dass** der Zuführantrieb (20a, 20b) einen ersten und einen zweiten Zuführantrieb (20a, 20b) zum Zuführen eines Profilelement-Strangs (K) aus der Speichereinrichtung (300, 300a) umfasst, und/oder der Zwischenantrieb (30a, 30b) einen ersten und einen zweiten Zwischenantrieb (30a, 30b) zum Fördern eines Profilelement-Strangs (K) aus dem Zwischenspeicher (13a) zur Andrückrolle (50) umfasst.

8. Verarbeitungsstation (10) gemäß einem der vorangegangenen Ansprüche, **dadurch gekennzeichnet, dass** die Verarbeitungsstation (10) einen Lumineszenz-Taster aufweist, der eingerichtet ist, die Anbringung des Profilelement-Strangs (K) am Werkstück (W) zu überwachen.

9. Verarbeitungsstation (10) gemäß einem der vorangegangenen Ansprüche, **dadurch gekennzeichnet, dass** die Umlenkeinrichtung insbesondere ein Zuführrohr (200a) oder eine Umlenkrolle (201, 202) umfasst.

10. Bearbeitungsmaschine (1) mit einer Verarbeitungsstation (10) gemäß einem der vorangegangenen Ansprüche, welche Bearbeitungsmaschine (1) eine Fördereinrichtung zur Bewegung von Werkstücken entlang der Verarbeitungsstation (10) aufweist.

11. Bearbeitungsmaschine (1) gemäß Anspruch 10, **dadurch gekennzeichnet, dass** diese ferner eine bevorzugt bewegbare Speichereinrichtung (300, 300a) in Form einer Speicherrolle aufweist, die insbesondere mit einem bevorzugt zentral angeordneten Antrieb (350) und beispielsweise einer Puffereinrichtung 360, insbesondere einer Tänzerwalze, zur Regelung des Antriebs (350) versehen ist.

12. Bearbeitungsmaschine (1) gemäß Anspruch 11, **dadurch gekennzeichnet, dass** in Durchlaufrichtung des Profilelement-Strangs (K) zwischen der Speichereinrichtung (300, 300a) und dem Zuführantrieb (30) eine Umlenkeinrichtung (200, 200a) vorgesehen ist, wobei der Profilelement-Strang (K) die Speichereinrichtung (300, 300a) bevorzugt in einer im Wesentlichen horizontalen Richtung verlässt und durch die Umlenkeinrichtung (200, 200a) in eine im Wesentlichen vertikale Richtung umgelenkt wird, wobei die Umlenkeinrichtung insbesondere ein Zuführrohr (200a) oder eine Umlenkrolle (201, 202) umfasst.

13. Verfahren zum Anbringen eines Profilelements an einem plattenförmigen Werkstück (W), nämlich in einer Nut eines Paneels, welches Werkstück (W) bevorzugt zumindest teilweise einen Holz-, Holzwerkstoff- oder Kunststoffabschnitt aufweist, und eine Verarbeitungsstation gemäß einem der Ansprüche 1 bis 9 benutzt, umfassend die Schritte:
Zuführen eines Profilelement-Strangs (K) aus einer Speichereinrichtung (300, 300a) in einen bevorzugt vertikal ausgerichteten Zwischenspeicher (13a) einer Verarbeitungsstation (10), wobei der Profilelemente-Strang (K) die Speichereinrichtung (300, 300a) bevorzugt in einer im Wesentlichen horizontalen Richtung verlässt und durch eine Umlenkeinrichtung (200, 200a) in eine im Wesentlichen vertikale Richtung umgelenkt wird,
Positionsgenaues Fördern des Profilelement-Strangs (K) mittels eines Zwischenantriebs (30a, 30b) aus dem Zwischenspeicher zu einer freidrehenden Andrückrolle (50) zum Andrücken eines Abschnitts des Profilelement-Strangs (K) gegen ein Werkstück (W),
Trennen des Profilelement-Strangs (K) entsprechend einer Länge eines Werkstücks (W).

## Claims

1. Working station (10) for attaching a profile element to a planar workpiece (W), namely in a groove of a panel, which workpiece preferably at least partially comprises a wooden, wood-based or plastics portion, said working station comprising:
a feed drive (20a, 20b) for feeding in a profile element strand (K) from a storage device (300, 300a),
a preferably vertically oriented intermediate store (13a) for receiving a portion of the profile element strand (K),
an intermediate drive (30a, 30b) and a severing station (40) for severing the profile element strand (K),
the working station (10) comprising a freely rotating pressure roller (50) for pressing a portion of the profile element strand (K) fed through the intermediate drive (30a, 30b) against a workpiece, the profile element strand (K) being conveyed to the pressure roller (50) in a positionally accurate manner by means of the intermediate drive (30a, 30b),
a deflection device (200, 200a) being attached to the working station (10), the profile element strand leaving the storage device (300, 300a) and being deflected into a substantially vertical direction by means of the deflection device (200, 200a), **characterised in that**
a first guide channel (12a) is provided between the feed drive (20a, 20b) and the intermediate store (13a) optionally in the throughput direction of the profile element strand (K), and
a second guide channel (14a) is provided between the intermediate store (13a) and the intermediate drive (30a, 30b),
the profile element strand (K) being movable in a relatively free manner in the intermediate store (13a) and being deflected from a somewhat vertical direction into a direction pointing downwards in the vertical direction by means of a rounded portion of the intermediate store (13a) that is at the top in the vertical direction, such that the profile element strand (K) enters the second guide channel (14a) .

2. Working station (10) according to claim 1, **characterised in that** the working station (10) comprises a compressed-air device that can rotate the freely rotating pressure roller (50).

3. Working station (10) according to either of the preceding claims, **characterised in that** a detection device is provided, by means of which a fill level of the intermediate store (13a), in particular a length of the portion of the profile element strand provided in the intermediate store (13a), is monitored, for example by means of one or more light barriers.

4. Working station (10) according to any of the preceding claims, **characterised in that** the feed drive (20a, 20b) is a servo drive, the feed drive (20a, 20b) and/or the intermediate drive (30a, 30b) in particular having a moment release mechanism.

5. Working station (10) according to any of the preceding claims, **characterised in that** the severing station (40) for severing the profile element strand comprises a circular knife.

6. Working station (10) according to any of the preceding claims, **characterised in that** the intermediate store (13a) is covered by a transparent cover element (10b).

7. Working station (10) according to any of the preceding claims, **characterised in that** the feed drive (20a, 20b) comprises a first and a second feed drive (20a, 20b) for feeding in a profile element strand (K) from the storage device (300, 300a), and/or the intermediate drive (30a, 30b) comprises a first and a second intermediate drive (30a, 30b) for conveying a profile element strand (K) from the intermediate store (13a) to the pressure roller (50) .

8. Working station (10) according to any of the preceding claims, **characterised in that** the working station (10) comprises a luminescence sensor that is designed to monitor the attachment of the profile element strand (K) to the workpiece (W).

9. Working station (10) according to any of the preceding claims, **characterised in that** the deflection device in particular comprises a feed pipe (200a) or a deflection roller (201, 202).

10. Machining apparatus (1) comprising a working station (10) according to any of the preceding claims, which machining apparatus (1) comprises a conveying device for moving workpieces along the working station (10).

11. Machining apparatus (1) according to claim 10, **characterised in that** it further comprises a preferably movable storage device (300, 300a) in the form of a take-up roller that is in particular provided with a preferably centrally arranged drive (350) and, for example, a buffer device 360, in particular a dancing roller, for controlling the drive (350).

12. Machining apparatus (1) according to claim 11, **characterised in that** a deflection device (200, 200a) is provided between the storage device (300, 300a) and the feed drive (20a, 20b) in the throughput direction of the profile element strand (K), the profile element strand (K) preferably leaving the storage device (300, 300a) in a substantially horizontal direction and being deflected into a substantially vertical direction by means of the deflection device (200, 200a), the deflection device in particular comprising a feed pipe (200a) or a deflection roller (201, 202).

13. Method for attaching a profile element to a planar workpiece (W), namely in a groove of a panel, which workpiece (W) preferably at least partially comprises a wooden, wood-based or plastics portion, and uses a working station according to any of claims 1 to 9, said method comprising the steps of:
feeding a profile element strand (K) from a storage device (300, 300a) into a preferably vertically oriented intermediate store (13a) of a working station (10), wherein the profile element strand (K) preferably leaves the storage device (300, 300a) in a substantially horizontal direction and is deflected into a substantially vertical direction by means of a deflection device (200, 200a),
conveying the profile element strand (K) in a positionally accurate manner by means of an intermediate drive (30a, 30b) from the intermediate store to a freely rotating pressure roller (50) for pressing a portion of the profile element strand (K) against a workpiece (W),
severing the profile element strand (K) in accordance with a length of a workpiece (W).

## Revendications

1. Station d'usinage (10) destinée à monter un élément profilé sur une pièce (W) en forme de plaque, à savoir dans une rainure d'un panneau, laquelle pièce présente de préférence au moins en partie une partie en bois, en matériau dérivé du bois ou en matière plastique, avec :
un entraînement d'amenée (20a, 20b) destiné à amener une ligne d'élément profilé (K) à partir d'un dispositif de stockage (300, 300a),
un dispositif de stockage intermédiaire (13a) orienté de préférence verticalement destiné à recevoir une partie de la ligne d'élément profilé (K),
un entraînement intermédiaire (30a, 30b) ainsi qu'une station de séparation (40) destinée à séparer la ligne d'élément profilé (K), dans laquelle
la station d'usinage (10) présente un rouleau de pression (50) tournant librement destiné à presser une partie, amenée au travers de l'entraînement intermédiaire (30a, 30b), de la ligne d'élément profilé (K) contre une pièce, dans laquelle, au moyen de l'entraînement intermédiaire (30a, 30b), un transport en position précise de la ligne d'élément profilé (K) en direction du rouleau de pression (50) s'effectue,
dans laquelle un dispositif de renvoi (200, 200a) est monté sur la station d'usinage (10), dans laquelle la ligne d'élément profilé quitte le dispositif de stockage (300, 300a) et est renvoyée au travers du dispositif de renvoi (200, 200a) dans une direction sensiblement verticale, **caractérisée en ce que**
le cas échéant, un premier canal de guidage (12a) est prévu dans la direction de passage de la ligne d'élément profilé (K) entre l'entraînement d'amenée (20a, 20b) et le dispositif de stockage intermédiaire (13a), et
un second canal de guidage (14a) est prévu entre le dispositif de stockage intermédiaire (13a) et l'entraînement intermédiaire (30a, 30b),
dans laquelle la ligne d'élément profilé (K) est mobile relativement librement dans le dispositif de stockage intermédiaire (13a) et est renvoyée au travers d'un arrondi supérieur dans la direction verticale, du dispositif de stockage intermédiaire (13a) d'une direction plutôt verticale dans une direction pointant vers le bas dans la direction verticale, de sorte que la ligne d'élément profilé (K) parvient dans le second canal de guidage (14a).

2. Station d'usinage (10) selon la revendication 1, **caractérisée en ce que** la station d'usinage (10) présente un dispositif à air comprimé, qui peut amener le rouleau de pression (50) tournant librement à être mis en rotation.

3. Station d'usinage (10) selon l'une quelconque des revendications précédentes, **caractérisée en ce qu'**un dispositif de détection est prévu, à l'aide duquel un niveau de remplissage du dispositif de stockage intermédiaire (13a), en particulier une longueur de la partie prévue dans le dispositif de stockage intermédiaire (13a), de la ligne d'élément profilé, est surveillée, par exemple au moyen d'une ou de plusieurs barrières lumineuses.

4. Station d'usinage (10) selon l'une quelconque des revendications précédentes, **caractérisée en ce que** l'entraînement d'amenée (20a, 20b) est un servo-entraînement, dans laquelle l'entraînement d'amenée (20a, 20b) et/ou l'entraînement intermédiaire (30a, 30b) disposent en particulier d'une libération de couple.

5. Station d'usinage (10) selon l'une quelconque des revendications précédentes, **caractérisée en ce que** la station de séparation (40) destinée à séparer la ligne d'élément profilé présente une lame circulaire.

6. Station d'usinage (10) selon l'une quelconque des revendications précédentes, **caractérisée en ce que** le dispositif de stockage intermédiaire (13a) est recouvert par un élément de recouvrement (10b) transparent.

7. Station d'usinage (10) selon l'une quelconque des revendications précédentes, **caractérisée en ce que** l'entraînement d'amenée (20a, 20b) comprend un premier et un second entraînement d'amenée (20a, 20b) destinés à amener une ligne d'élément profilé (K) à partir du dispositif de stockage (300, 300a), et/ou l'entraînement intermédiaire (30a, 30b) comprend un premier et un second entraînement intermédiaire (30a, 30b) destinés à transporter une ligne d'élément profilé (K) à partir du dispositif de stockage intermédiaire (13a) en direction du rouleau de pression (50).

8. Station d'usinage (10) selon l'une quelconque des revendications précédentes, **caractérisée en ce que** la station d'usinage (10) présente un palpeur à luminescence, qui est conçu pour surveiller le montage de la ligne d'élément profilé (K) sur la pièce (W).

9. Station d'usinage (10) selon l'une quelconque des revendications précédentes, **caractérisée en ce que** le dispositif de renvoi comprend en particulier un tube d'amenée (200a) ou une poulie de renvoi (201, 202).

10. Machine-outil (1) avec une station d'usinage (10) selon l'une quelconque des revendications précédentes, laquelle machine-outil (1) présente un dispositif de transport destiné à déplacer des pièces le long de la station d'usinage (10).

11. Machine-outil (1) selon la revendication 10, **caractérisée en ce que** celle-ci présente en outre un dispositif de stockage (300, 300a) de préférence mobile sous forme d'un rouleau de stockage, qui est pourvu en particulier d'un entraînement (350) disposé de préférence de manière centrale et par exemple d'un dispositif tampon 360, en particulier d'un rouleau tendeur, destiné à réguler l'entraînement (350).

12. Machine-outil (1) selon la revendication 11, **caractérisée en ce qu'**un dispositif de renvoi (200, 200a) est prévu dans la direction de passage de la ligne d'élément profilé (K) entre le dispositif de stockage (300, 300a) et l'entraînement d'amenée (20a, 20b), dans laquelle la ligne d'élément profilé (K) quitte le dispositif de stockage (300, 300a) de préférence dans une direction sensiblement horizontale et est renvoyée au travers du dispositif de renvoi (200, 200a) dans une direction sensiblement verticale, dans laquelle le dispositif de renvoi comprend en particulier un tube d'amenée (200a) ou une poulie de renvoi (201, 202).

13. Procédé de montage d'un élément profilé sur une pièce (W) en forme de plaque, à savoir dans une rainure d'un panneau, laquelle pièce (W) présente de préférence au moins en partie une partie en bois, en matériau dérivé du bois ou en matière plastique, et utilise une station d'usinage selon l'une quelconque des revendications 1 à 9, comprenant les étapes suivantes :
amenée d'une ligne d'élément profilé (K) à partir d'un dispositif de stockage (300, 300a) dans un dispositif de stockage intermédiaire (13a) orienté de préférence verticalement d'une station d'usinage (10), dans laquelle la ligne d'élément profilé (K) quitte le dispositif de stockage (300, 300a) de préférence dans une direction sensiblement horizontale et est renvoyée au travers d'un dispositif de renvoi (200, 200a) dans une direction sensiblement verticale,
transport en position précise de la ligne d'élément profilé (K) au moyen d'un entraînement intermédiaire (30a, 30b) à partir du dispositif de stockage intermédiaire en direction d'un rouleau de pression (50) tournant librement destiné à presser une partie de la ligne d'élément profilé (K) contre une pièce (W),
séparation de la ligne d'élément profilé (K) en fonction d'une longueur d'une pièce (W).
